# EUROPÄISCHE PATENTSCHRIFT

(11) **EP 1 831 071 B1**
(45) Veröffentlichungstag und Bekanntmachung des Hinweises auf die Patenterteilung: **10.02.2010**
(21) Anmeldenummer: 05821514.6
(22) Anmeldetag: 22.12.2005
(51) Int. Cl.: B63B 35/71, B63B 3/04, B63B 5/24

(54) **VERFAHREN UND VORRICHTUNG ZUM HERSTELLEN EINES BOOTSKÖRPERS EINES WASSERSPORTGERÄTS**
METHOD AND DEVICE FOR PRODUCING A BOAT-TYPE BODY OF A WATER SPORT DEVICE
PROCEDE ET DISPOSITIF POUR PRODUIRE UNE COQUE D'UN APPAREIL DE SPORT NAUTIQUE

(30) Priorität: 30.12.2004 DE 102004063561
(43) Veröffentlichungstag der Anmeldung: 12.09.2007
(60) Teilanmeldung: 08170113.8
(73) Patentinhaber: Richter, Günter, 57610 Altenkirchen (DE)
(72) Erfinder: Richter, Günter, 57610 Altenkirchen (DE)
(74) Vertreter: Schaumburg, Thoenes, Thurn, Landskron, Eckert
(86) Internationale Anmeldenummer: PCT/EP2005/057070
(87) Internationale Veröffentlichungsnummer: WO 2006/069954

(56) Entgegenhaltungen:
- CA-A1- 2 404 042
- US-A- 4 681 060
- US-A- 4 980 112
- US-A- 5 275 121
- US-A- 5 331 915

## Beschreibung

Die Erfindung betrifft ein Verfahren und eine Vorrichtung zum Herstellen eines Bootskörpers eines Wassersportgerätes. Der Bootskörper ist mit Hilfe eines thermoplastischen Formverfahrens hergestellt. Ferner betrifft die Erfindung ein Wassersportgerät.

Zahlreiche Kunststoffprodukte werden kostengünstig mit Hilfe von thermoplastischen Formverfahren, wie z.B. mit Hilfe eines Blasformverfahrens, eines Rotationsformverfahrens, eines Twinsheet-Formverfahrens oder eines Tiefziehformverfahrens, aus thermoplastischen Kunststoffen hergestellt. Ein Blasformverfahren hat gegenüber einem Rotationsformverfahren beispielsweise den Vorteil, dass es kostengünstiger durchzuführen ist und mit Hilfe des Blasformverfahrens bessere Materialeigenschaften des erzeugten blasgeformten Elements erzielbar sind. Jedoch können insbesondere bei Bootskörpern Öffnungen sowie Bereiche um Öffnungen herum nicht beliebig geformt werden. Dadurch können spezielle Anforderungen nicht immer zufrieden stellend erfüllt werden.

Ferner tritt das Problem auf, dass aufgrund der im Wesentlichen gleichmäßigen Wandstärke von thermoplastisch geformten Bootskörpern keine beliebig stabilen Bereiche im Bootskörper ausgebildet werden können. So müssen Bereiche, in denen eine relativ große Kraft in den Bootskörper eingeleitet wird, nachbearbeitet werden, indem in diesen Bereichen insbesondere zusätzliches Material nachträglich auf den Bootskörper aufgeschweißt wird oder weitere Elemente angebracht werden. Solche beanspruchten Bereiche sind insbesondere im Bootskörper vorgesehene Griffe oder im Bootskörper vorgesehene Öffnungen zum Befestigen eines Taus. In anderen Bereichen, in denen eine Instabilität im Allgemeinen nicht unmittelbar zu einer Zerstörung des Bootskörpers führt, wird diese Instabilität oft aus Kostengründen in Kauf genommen.

Bei einem Bootskörper eines Wassersportgerätes, wie z.B. dem Bootskörper eines Kanus, werden beim Stand der Technik Griffausformungen und Lenzstopfenausbildungen nachträglich durch zusätzliches Aufbringen von Material verstärkt. Insbesondere bei Kanus ist ein Süllrand um die Einstiegsöffnung herum vorgesehen, an dem dann eine Spritzdecke befestigt wird. Dieser Süllrand wird entweder durch das Anbringen von Profilen verstärkt oder wird bewusst instabil gelassen. Bei einem instabilen Süllrand wird jedoch ein Abrutschen der Spritzdecke nicht sicher verhindert. Ferner müssen zusätzliche Formteile zum Anbringen einer Rückenstütze und zum Realisieren von Schenkelabstützungen nachträglich eingebaut und befestigt werden.

Dokument US 4 980 112 zeigt ein Verfahren nach dem Oberbegriff des Anspruchs 1. Dokument US 5 275 121 beschreibt die Herstellung eines Bootes mit einer flexiblen Außenhaut unter Verwendung eines Rotationsgießverfahrens. Aufgabe der Erfindung ist es, ein Verfahren und eine Vorrichtung anzugeben, durch die ein Bootskörper eines Wassersportgerätes bereits weitgehend vollständig in einem thermoplastischen Formverfahren herstellbar ist und nur relativ geringe Nacharbeiten zum Fertigstellen des Bootskörpers erforderlich sind.

Diese Aufgabe wird gemäß einem ersten Aspekt der Erfindung durch ein Verfahren mit den Merkmalen des Anspruchs 1 gelöst. Vorteilhafte Weiterbildungen der Erfindung sind in den abhängigen Patentansprüchen angegeben.

Durch das erfindungsgemäße Verfahren zum Herstellen eines Bootskörpers eines Wassersportgerätes kann der Einstiegsbereich um die Einstiegsöffnung des thermoplastisch geformten Bootskörpers auf einfache Art und Weise durch den Rahmen verstärkt und/oder Ausformungen realisiert werden, die allein im thermoplastischen Formverfahren nicht herstellbar sind. Dadurch lässt sich der Anwendungsbereich und die Qualität des so hergestellten Bootskörpers verbessern, wobei Nacharbeiten zum Fertigen des kompletten Bootes mit Hilfe vorgeformten Rahmen verringert sind. Ferner kann ein solcher Bootskörper kostengünstig hergestellt werden.

Ein zweiter Aspekt der Erfindung betrifft eine Vorrichtung zum Herstellen eines Bootskörpers eines Wassersportgerätes, die eine Negativform umfasst, an deren Innenseite ein umlaufender Rahmen angeordnet ist, wobei Innenseite der Negativform im Wesentlichen die Außenform des Bootskörpers vorgibt. Ferner umfasst die Vorrichtung eine Anordnung, die mit Hilfe eines thermoplastischen Formverfahrens den Bootskörper an der Innenseite der Form ausbildet, so dass der Bootskörper den umlaufenden Rahmen zumindest teilweise berührt, wodurch der Bootskörper und der umlaufende Rahmen derart verbunden sind, dass sich der mit dem Bootskörper verbundene Rahmen um eine Einstiegsöffnung des Bootskörpers erstreckt.

Durch eine solche erfindungsgemäße Vorrichtung wird erreicht, dass an der Berührungsstelle zwischen dem Bootskörper und dem Rahmen während des Formvorgangs eine sichere und sehr dauerhafte Verbindung erzeugt wird. Das nachträgliche Verbinden des Bootskörpers mit Versteifungsprofilen ist durch eine solche Vorrichtung nicht mehr erforderlich. Mit Hilfe dieser Vorrichtung sind Bootskörper auf einfache Art und Weise herstellbar, die durch den Rahmen verstärkt und/oder versteift sind. Ferner können nahezu beliebige Ausformungen des Einstiegsbereichs auf einfache Art und Weise hergestellt werden und so weitere Funktionselemente realisiert werden. Mit Hilfe dieser Vorrichtung können solche Bootskörper insbesondere dann einfach und kostengünstig hergestellt werden, wenn eine Form verwendet wird, in der der Rahmen auf einfache Art und Weise in der richtigen Position angeordnet und in seiner Lage fixiert werden kann. Dadurch wird die Handhabung der Form und des Rahmens vereinfacht.

Ein weiterer Aspekt der Erfindung betrifft ein Wassersportgerät mit einem lang gestreckten Bootskörper, der zumindest mit einem Rahmen durch einen Formvorgang zum Formen des Bootskörpers verbunden ist. Ein solches Wassersportgerät kann mit Hilfe des Rahmens gezielt im Einstiegsbereich versteift bzw. stabilisiert werden, wodurch Anforderungen an eine höhere Stabilität im diesem Bereich einfach erfüllt werden können. Durch das Verbinden des Rahmens mit dem Bootskörper während des Formvorgangs wird eine sehr feste und dauerhafte Verbindung erzeugt. Nach dem Formvorgang ist der Rahmen mit dem Bootskörper einstückig verbunden.

Im Unterschied dazu sind nachträglich zwischen dem Bootskörper und einem Rahmen hergestellte Verbindungen nicht so fest und nicht so dauerhaft, da sie je nach Verbindungsart keine großflächige Verbindung bzw. keine vollflächige Verbindung zwischen aneinandergrenzenden Flächen des Rahmens und des Bootskörpers gestatten oder die Materialstabilität bzw. die Materialeigenschaften des Bootskörpers oder des Rahmens beispielsweise durch Anlösen deren Oberflächen beeinträchtigen. Ferner treten bei solchen Verbindungsarten Probleme beim sauberen Ausbilden von Randbereichen eines auf den Bootskörper aufgesetzten Rahmens auf, da entweder in den Randbereichen keine Verbindung vorhanden ist oder eine Schweißnaht sowie herausquellendes Verbindungsmaterial zwischen dem Rahmen und dem Bootskörper sichtbar ist.

Zum besseren Verständnis der vorliegenden Erfindung wird im Folgenden auf die in den Zeichnungen dargestellten bevorzugten Ausführungsbeispiele Bezug genommen, die an Hand spezifischer Terminologie beschrieben sind. Es sei jedoch darauf hingewiesen, dass der Schutzumfang der Erfindung dadurch nicht eingeschränkt werden soll, da derartige Veränderungen und weitere Modifizierungen an den gezeigten Vorrichtungen und den Verfahren sowie derartige weitere Anwendungen der Erfindung, wie sie darin aufgezeigt sind, als übliches derzeitiges oder künftiges Fachwissen eines zuständigen Fachmanns angesehen werden. Die Figuren zeigen Ausführungsbeispiele der Erfindung, nämlich:
- Fig. 1: eine Draufsicht auf einen erfindungsgemäßen Bootskörper eines Ka- nus;
- Fig. 2: eine Seitenansicht des Kanus nach Fig. 1 in einer verkleinerten Dar- stellung;
- Fig. 3: eine Schnittdarstellung eines Längsschnitts durch den hinteren End- bereich des Kanus nach Fig. 2 in einer vergrößerten Darstellung;
- Fig. 4: eine perspektivische Draufsicht auf die Unterseite eines vorgefertig- ten Süllrahmens zum Herstellen eines Bootskörpers nach den Fig. 1 und 2;
- Fig. 5: eine vergrößerte Darstellung eines Ausschnitts des Süllrahmens nach Fig. 4;
- Fig. 6: eine Schnittdarstellung eines Querschnitts des Süllrahmens nach den Fig. 4 oder 5 entlang der Schnittlinie A-A nach Fig. 5;
- Fig. 7: eine perspektivische Draufsicht auf die Oberseite des Süllrahmens nach Fig. 4; und
- Fig. 8: eine vergrößerte Darstellung eines Ausschnitts des Süllrahmens nach Fig. 7.

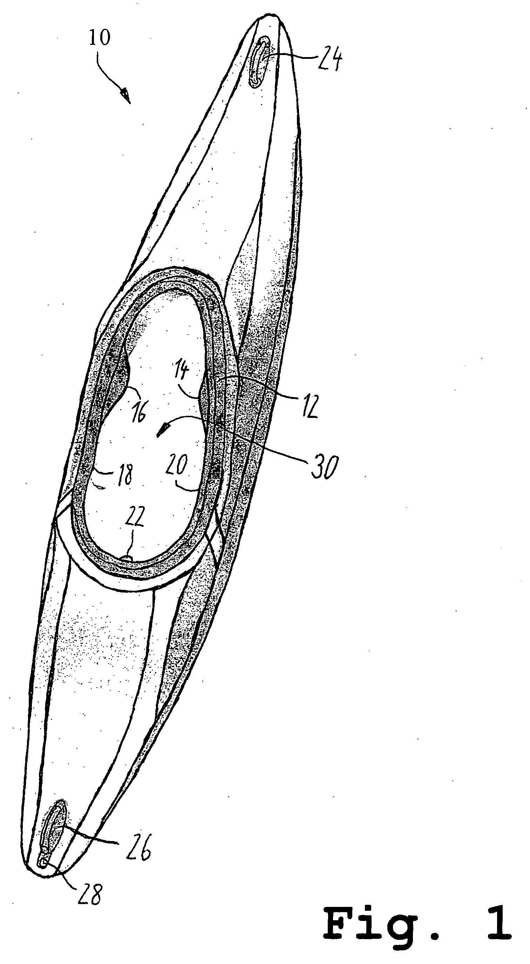

In Fig. 1 ist ein erfindungsgemäßer Bootskörper 10 eines Kanus dargestellt, der aus thermoplastischem Kunststoff in einem Blasformverfahren hergestellt ist. Der Bootskörper 10 hat einen Süllrahmen 12 mit angeformten Schenkelabstützelementen 14, 16, mit angeformten Sitzverstellungsanordnungen 18, 20 und mit einer im Süllrahmen 12 integrierten Anordnung zur Rückenstützenfixierung 22. Ferner sind Transportgriffe 24, 26 und eine Aufnahmeöffnung 28 für einen Lenzstopfen im Bootskörper 10 vorgesehen. Sowohl das Griffelement 24, das einstückig mit der Lenzstopfenöffnung 28 ausgebildete Griffelement 26 und der Süllrahmen 12 sind bereits vor dem Blasvorgang in der Blasform angeordnet worden. Vorzugsweise sind in der Blasform Vertiefungen vorgesehen, in die das Griffelement 24, der Süllrahmen 12 und das Griffelement 26 mit der Lenzstopfenöffnung 28 eingelegt werden. Vorzugsweise werden diese in die Öffnung eingelegten Elemente 12, 24, 26 dort mit geeigneten Mitteln fixiert. Diese eingelegten Elemente 12, 24, 26 werden vor dem Blasvorgang vorzugsweise in der Blasform vorgewärmt. Anschließend wird ein Vorformling in die Blasform eingebracht und aufgeblasen, so dass sich an der Innenwand der Blasform bzw. um die in die Blasform eingelegten Elemente 12, 24, 26 herum eine im Wesentlichen gleichmäßig starke blasgeformte Kunststoffschicht ausbildet.

Das so blasgeformte Element berührt während des Formvorgangs zumindest einen Bereich der Oberfläche der Elemente 12, 24, 26, wodurch zumindest diese berührten Oberflächenbereich dieser Elemente 12, 24, 26 mit dem im Blasformverfahren gebildeten Blasformteil vorzugsweise durch Verschmelzen stoffschlüssig verbunden sind. Dieser Schmelzvorgang wird insbesondere durch das Vorheizen der eingelegten Elemente 12, 24, 26 begünstigt. Durch die Vorheiztemperatur kann der Verschmelzungsgrad zwischen dem blasgeformten Element und den in die Blasform eingelegten Elementen 12, 24, 26 eingestellt werden. Dadurch können auch Elemente 12, 24, 26 am Bootskörper 10 ausgebildet werden, die allein im Blasformvorgang nicht oder nicht mit den gewünschten Eigenschaften herstellbar sind.

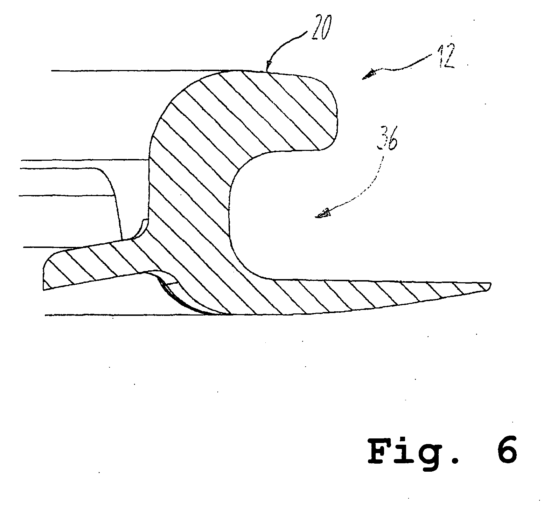

Der Süllrahmen 12 ist um eine Einstiegsöffnung 30 des Bootskörpers 10 herum angeordnet, wobei eine seitliche umlaufende Nut 36 im Süllrahmen 12 vorgesehen ist, die in der in Figur 6 gezeigten Schnittdarstellung des Süllrahmens 12 gezeigt ist. In diese Nut 36 kann zum Abdichten der Einstiegsöffnung 30 zu einem aus der Einstiegsöffnung 30 ragenden Körper einer Person eine umlaufende Spritzdecke, die auch als Persenning bezeichnet wird, eingelegt und gesichert werden. Vorzugsweise ist die Persenning schlauchförmig, wobei ein Schlauchende mit Hilfe eines vorgespannten Gummirings in der Nut 36 gehalten wird. Am anderen Schlauchende kann ein weiterer vorgespannter Gummiring vorgesehen sein, der dieses Schlauchende an den aus der Einstiegsöffnung 30 ragenden Körper drückt und dadurch zum Körper hin abdichtet. Der oberhalb der Nut 36 ausgebildete Vorsprung wird auch als Süllrand bezeichnet.

Das Profil des Süllrahmens 12 ist im so genannten Extrusions-Pressverfahren und die Griffelemente 24, 26 sind einem Spritzgussverfahren hergestellt. Der Süllrahmen 12 und die Elemente 24, 26 sind vorzugsweise aus dem gleichen thermoplastischen Werkstoff wie der Bootskörper 10 hergestellt, beispielsweise einem Polyethylen-Werkstoff. Der Süllrahmen 12 ist vorzugsweise als Vollprofil ausgebildet, wodurch eine hohe Steifigkeit im Bereich um die Einstiegsöffnung 30 herum erreicht wird. Durch das Extrusions-Pressverfahren und das Spritzgussverfahren ist eine hohe Gestaltungsfreiheit der durch diese Verfahren gefertigten Elemente 12, 24, 26 gegeben. Vorzugsweise sind alle Elemente des Bootskörpers 10, die einer hohen Krafteinwirkung ausgesetzt sind bzw. einer hohen Krafteinwirkung eingesetzt sein können, im Extrusions-Pressverfahren, im Spritzgußverfahren oder einem anderen geeigneten Formverfahren hergestellt und werden als Einlegeteil in die Blasform eingelegt. Das Extrusions-Pressverfahren ermöglicht ferner, dass weitere Elemente, wie die Schenkelstützelemente 14, 16, die Sitzverstellungselemente 18, 20 und das Rückenstützenfixierungselement 22, direkt am bzw. im Süllrahmen 12 angeformt sind.

Beim Stand der Technik müssen diese Elemente 14 bis 22 aufwendig als Einzelteile hergestellt und in relativ aufwendigen Fertigungsverfahren am blasgeformten Bootskörper 10 einzeln angebracht werden. Jedoch ist das Verbinden solcher Elemente 14 bis 22 mit dem Bootskörper 10 problematisch, da insbesondere der Bootskörper 10 durch das Einbringen von Verbindungselementen, wie Schrauben oder Nieten, durch das Anlösen des Bootskörpers 10 mit Klebstoff oder die Materialveränderungen beim nachträglichen Verschweißen des Bootskörpers 10 mit den weiteren Elementen 14 bis 22 beschädigt werden kann. Das erfindungsgemäße Verfahren zum Herstellen des Bootskörpers 10 ist demgegenüber wesentlich kostengünstiger, wobei auch die Qualität des Bootskörpers 10 und die Gebrauchseigenschaften des kompletten Bootes wesentlich verbessert sind.

Im Bootskörper 10 muss zum Entfernen von in den Bootskörper 10 eingedrungenem Wasser eine Lenzöffnung vorgesehen sein, die vorzugsweise an einem Ende des Bootskörpers 10 vorgesehen ist. Mit Hilfe der Lenzöffnung 28 ist eine einfache Entfernung von im Bootskörper 10 vorhandenen Wasser möglich ist. Die Enden von geeigneten Bootskörperformen sind jedoch üblicherweise schwer zugänglich, da diese Enden spitz zulaufen. Dadurch kann beim Stand der Technik in diesen Endbereichen nur relativ schwierig und aufwendig Material von innen zur Verstärkung eines blasgeformten Bootskörpers 10 eingebracht werden, um eine verstärkte Lenzöffnung 28 auszubilden, in die ein üblicher Lenzstopfen eingebracht werden kann, der die Lenzöffnung 28 zuverlässig abgedichtet wird.

Erfindungsgemäß wird das Griffelement 26 zusammen mit der Lenzöffnung 28 als ein Bauteil im Spritzgussverfahren hergestellt. Wie bereits erwähnt, wird dieses Bauteil in die Blasform vor dem Blasvorgang eingelegt, wodurch auch dieses Bauteil während des Blasvorgangs mit dem Blasformteil verschmolzen und somit verschweißt wird.

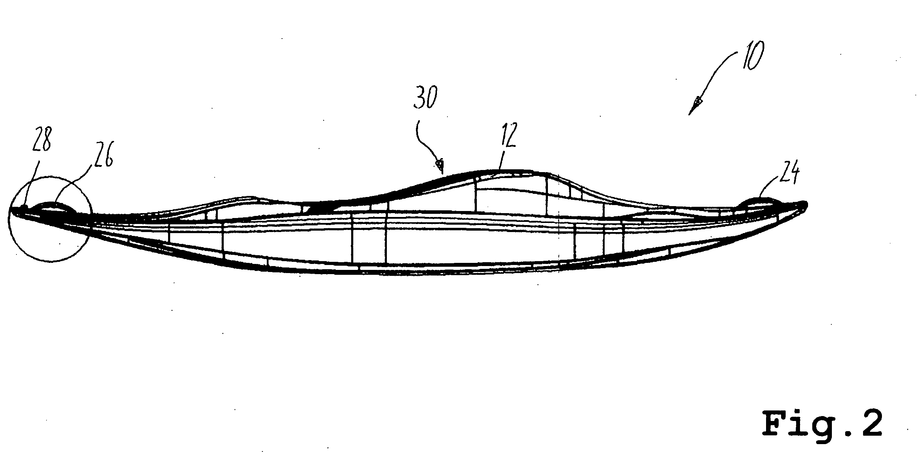

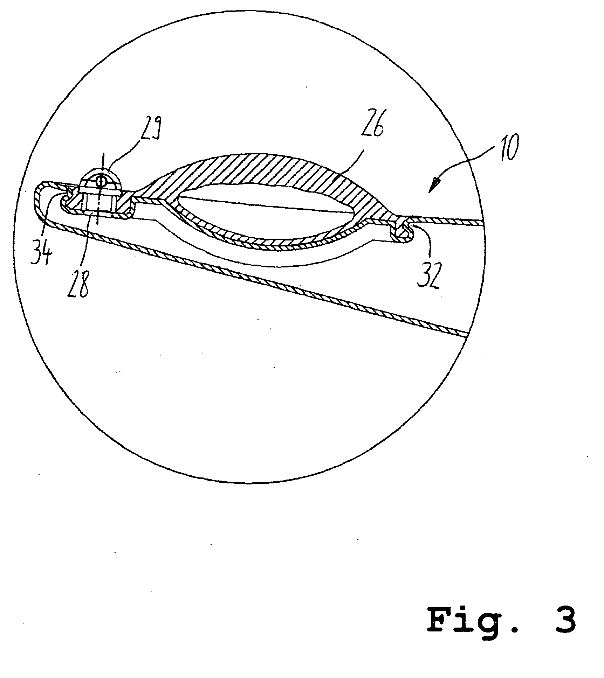

In Fig. 2 ist eine Seitenansicht des Bootskörpers 10 nach Fig. 1 dargestellt. Gleiche Elemente haben gleiche Bezugszeichen. Eine Schnittdarstellung des in Fig. 2 mit einem Kreis umrandeten Bereichs ist in Fig. 3 in einer vergrößerten Schnittdarstellung detailliert dargestellt. Der im Blasformverfahren gefertigte Blaskörper ist in Fig. 3 mit einer Schraffur von links oben nach rechts unten dargestellt und das spritzgegossene Bauteil mit dem Griffelement 26 und der Lenzöffnung 28 ist mit einer Schraffur von linken unten nach rechts oben dargestellt. Das spritzgegossene Bauteil hat hinterschnittene Bereiche 32, 34, die vom Blaskörper umschlossen werden, so dass zusätzlich oder alternativ zum Verschweißen des Blaskörpers mit dem spritzgegossenen Bauteil eine formschlüssige Verbindung hergestellt wird.

Das spritzgegossene Bauteil mit dem Griffelement 26 und der Lenzstopfenöffnung 28 ist somit sowohl stoffschlüssig durch das Verschweißen des blasgeformten Elementes mit dem spritzgegossenen Element als auch durch eine formschlüssige Verbindung durch den Eingriff des blasgeformten Elementes in die hinterschnittenen Bereiche 32, 34 verbunden. In Fig. 3 ist ferner ein Lenzstopfen 29 in der Lenzstopfenöffnung 28 vorhanden, durch den die Lenzstopfenöffnung 28 abgedichtet ist.

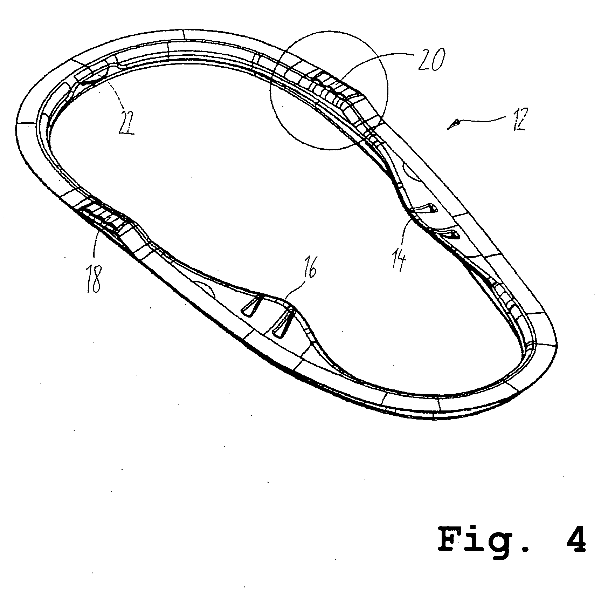

In Fig. 4 ist eine perspektivische Draufsicht die Unterseite des Süllrahmens 12 dargestellt. Wie bereits im Zusammenhang mit Fig. 1 erwähnt, bildet der Süllrahmen 12 einen stabilen Rahmen um die Einstiegsöffnung 30, der dem Bootskörper 10 um die Einstiegsöffnung 30 herum stabilisiert. Das Rückenstützenfixierungselement 22, die Sitzverstellungselemente 18, 20 und die Schenkelabstützelemente 14, 16 sind in Fig. 4 detaillierter dargestellt.

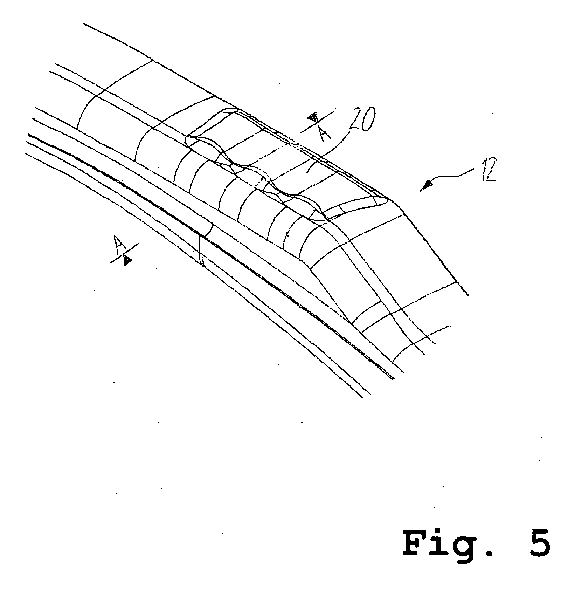

In Fig. 5 ist eine detaillierte Darstellung des in Fig. 4 von dem Kreis eingeschlossenen Bereichs des Süllrahmens 12 dargestellt. Insbesondere ist in Fig. 5 die Ausbildung des Sitzverstellungselementes 18 am Süllrahmen 12 detailliert dargestellt, in der Vertiefungen sichtbar sind, die als Raster zum Positionieren und Befestigen eines Sitzes dienen.

In Fig. 6 ist eine Schnittdarstellung des Süllrahmens 12 durch die Schnittebene A-A nach Fig. 5 durch das am Süllrahmen ausgebildete Sitzverstellungselement 18 hindurch dargestellt. Der Süllrahmen 12 hat eine seitlich umlaufende Nut 36, in die, wie bereits erwähnt eine umlaufende Schwitzwasserpersenning eingreifen kann. Alternativ zu dem bereits erwähnten vorgespannten Gummiring kann die Persenning auch mit Hilfe einer Verschnürung vor dem Herausgleiten aus der Nut 36 gesichert werden.

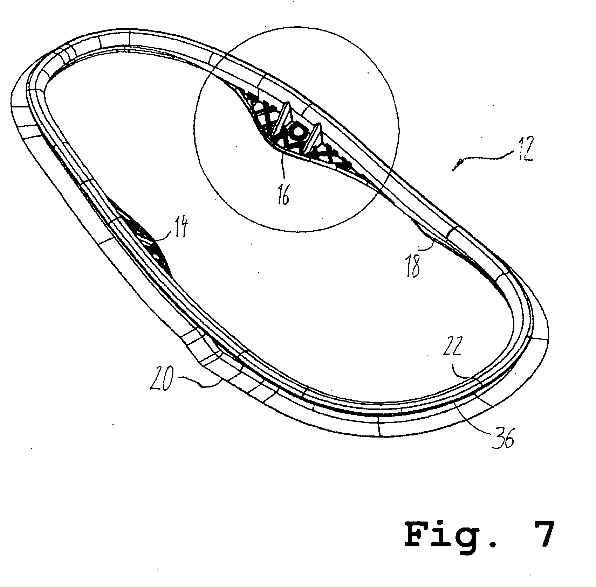

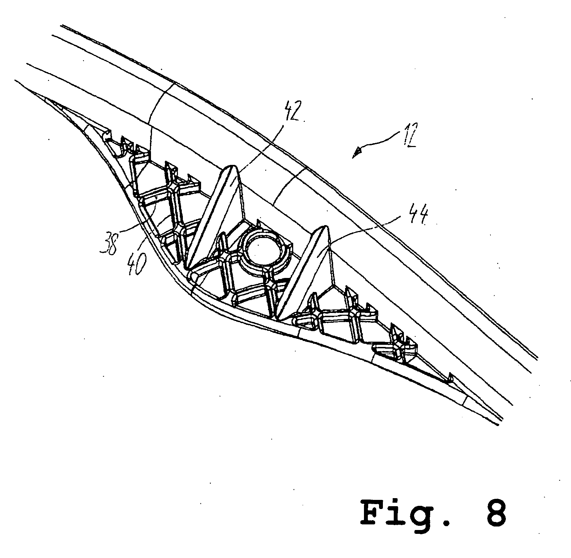

In Fig. 7 ist eine perspektivische Ansicht der Oberseite des Süllrahmens 12 dargestellt. In Fig. 8 ist der in Fig. 7 mit Hilfe eines Kreises markierte Bereich des Süllrahmens 12 in einer vergrößerten Darstellung gezeigt. Dieser Bereich umfasst das Schenkelabstützelement 16. Die Schenkelabstützelemente 14, 16 haben an der Oberseite gitterartig angeordnete Versteifungselemente, von denen zwei mit den Bezugszeichen 38, 40 bezeichnet sind. Ferner sind weitere Versteifungselemente 42, 44 vorgesehen, die ein Abknicken des vom Süllrahmen 12 nach innen zur Einstiegsöffnung 30 hin vorstehenden Schenkelabstützelementes 16 auch bei relativ großer Krafteinwirkung verhindern.

Vorzugsweise wird der blasgeformte Bootskörper 10 aus einem mindestens zweischichtigen Vorformling hergestellt, wobei die erste Schicht des Vorformlings einen Werkstoff einer ersten Farbe und die zweite Schicht einen Werkstoff einer zweiten Farbe enthält. Ein solcher Vorformling sowie ein Verfahren und eine Vorrichtung zum Herstellen eines solchen mindestens zweischichtigen Vorformlings ist aus dem Dokument DE 195 45 441 A1 bekannt. Die in diesem Dokument enthaltenen Ausführungen zu dem Vorformling und dem Verfahren sowie der Vorrichtung zum Herstellen eines solchen Vorformlings werden hiermit durch Bezugnahme in die vorliegende Beschreibung aufgenommen.

Der mindestens zweischichtige Vorformling wird derart in die Blasform eingebracht, dass der Bootskörper 10 nach dem Blasvorgang, zumindest die Außenschicht des oberen Teils des Bootskörpers 10 die erste Farbe hat und zumindest die Außenschicht des unteren Teiles des Bootskörpers 10 die zweite Farbe hat. Dadurch lassen sich sehr einfach und kostengünstig mindestens zweifarbig gestaltete Bootskörper 10 herstellen. Insbesondere bei Wassersportgeräten ist die farbliche Gestaltung des Wassersportgerätes ausschlaggebend für den Kauf und die Beliebtheit eines Wassersportgerätes, so dass eine zweifarbige Gestaltung des Bootskörpers 10 sehr vorteilhaft für das Kundeninteresse und somit für den Verkauf des Wassersportgerätes ist. Ferner ist es vorteilhaft, die Außenschicht des unteren Teiles des Bootskörpers 10 in einer dunklen Farbe vorzusehen und den oberen Teil des Bootskörpers 10 in einer hellen Farbe, da die helle Farbe die Sonnenstrahlen nur gering absorbiert. Verunreinigungen mit im Wasser vorhandenen Partikeln, die sich über einen längeren Zeitraum auf dem im Wasser befindlichen unteren Teils des Bootskörpers 10 ablagern, sind hingegen auf einer dunklen Oberfläche nicht so kontrastreich sichtbar.

Alternativ zum im Ausführungsbeispiel beschriebenen Blasformverfahren können andere geeignete thermoplastischen Formverfahren zum erfindungsgemäßen Verbilden eines thermoplastisch geformten Elements und mindestens einem weiteren Element genutzt werden, wie z.B. ein Rotationsformverfahren, eine Twinsheet-Formverfahren oder eine Tiefziehformverfahren.

Obgleich in den Zeichnungen und in der vorhergehenden Beschreibung bevorzugte Ausführungsbeispiele aufgezeigt und detailliert beschrieben worden sind, sollten sie lediglich als rein beispielhaft und die Erfindung nicht einschränkend angesehen werden. Es wird darauf hingewiesen, dass nur die bevorzugten Ausführungsbeispiele dargestellt und beschrieben sind und sämtliche Veränderungen und Modifizierungen, die derzeit und künftig im Schutzumfang der Erfindung liegen, geschützt werden sollen.

### Bezugszeichenliste

- 10: Bootskörper
- 12, 14: Schenkelabstützelemente
- 16, 18: Sitzverstellungselemente
- 22: Rückenstützenfixierung
- 24, 26: Griffelemente
- 28: Lenzöffnung
- 29: Lenzstopfen
- 30: Einstiegsöffnung
- 31: Lenzstopfen
- 32, 34, 36: Hinterschneidung
- 38, 40, 42, 44: Versteigungselemente
- A-A: Schnittebene

## Patentansprüche

1. Verfahren zum Herstellen eines Bootskörpers eines Wassersportgerätes,
bei dem ein vorgeformter Rahmen (12) an einer Innenseite einer Negativform angeordnet wird, wobei die Außenform des Bootskörpers (10) im Wesentlichen durch die Innenseite der Negativform vorgegeben wird,
der Bootskörper (10) an der Innenseite der Form mit Hilfe eines thermoplastischen Formverfahrens erzeugt wird,
**dadurch gekennzeichnet, dass**
zumindest ein Teil der Oberfläche des Rahmens (12) während des Formvorgangs durch den mit Hilfe des thermoplastischen Formverfahrens gebildeten Bootskörper (10) berührt wird,
wobei eine Verbindung zwischen dem Rahmen (12) und dem Bootskörper (10) erzeugt wird, so dass der Rahmen (12) um eine Einstiegsöffnung des Bootskörpers (10) angeordnet ist.

2. Verfahren nach Anspruch 1, **dadurch gekennzeichnet, dass** der Rahmen (12) ein umlaufender geschlossener Rahmen (12) ist, der einen nach außen überstehenden Süllrand zum Befestigen einer Spritzdecke hat, wobei der Querschnitt des umlaufenden Rahmens (12) vorzugsweise ein Vollprofil ist.

3. Verfahren nach Anspruch 1 oder 2, **dadurch gekennzeichnet, dass** am Rahmen (12) mindestens ein Formelement ausgebildet ist, das vorzugsweise für eine Schenkelabstützung (14, 16) einer im Bootskörper (10) befindlichen Person, für eine Sitzverstellung (18, 20) eines im Bootskörper (10) angeordneten Sitzes und/oder für eine Rückenstützenfixierung (22) eines Rückenstützelementes des Sitzes vorgesehen ist.

4. Verfahren nach einem der vorhergehenden Ansprüche, **dadurch gekennzeichnet, dass** ein weiteres vorgeformtes Element (24) in der Form angeordnet wird, wobei das weitere vorgeformte Element vorzugsweise ein Griffelement (24, 26) ist.

5. Verfahren nach Anspruch 4, **dadurch gekennzeichnet, dass** das Griffelement (26) eine Grundplatte hat, die mit dem Bootskörper (10) durch das thermoplastische Formverfahren verbundenen wird, wobei in der Grundplatte eine Lenzöffnung (28) enthalten ist, die durch einen Lenzstopfen (29) abgedichtet wird.

6. Verfahren nach einem der vorhergehenden Ansprüche, **dadurch gekennzeichnet, dass** das thermoplastische Formverfahren ein Blasformverfahren, ein Rotationformverfahren, ein Twinsheet-Formverfahren oder ein Tiefziehformverfahren ist.

7. Verfahren nach einem der vorhergehenden Ansprüche, **dadurch gekennzeichnet, dass** durch das Berühren während des thermoplastischen Formvorgangs zumindest eine stoffschlüssige Verbindung zwischen dem Bootskörper (10) und dem Rahmen (12) erzeugt wird.

8. Verfahren nach einem der vorhergehenden Ansprüche, **dadurch gekennzeichnet, dass** der Bootskörper (10) den Rahmen (12) und/oder das vorgeformte Element (24, 26) zumindest teilweise derart umschließt, dass eine formschlüssige Verbindung zwischen dem Bootskörper (10) und dem Rahmen (12) bzw. und dem vorgeformten Element (24, 26) erzeugt wird.

9. Verfahren nach einem der vorhergehenden Ansprüche, **dadurch gekennzeichnet, dass** der Rahmen (12) und/oder das vorgeformte Element (12, 24, 26) vor dem thermoplastischen Formvorgang vorzugsweise in der Form vorgewärmt wird.

10. Verfahren nach einem der vorhergehenden Ansprüche, **dadurch gekennzeichnet, dass** das der Bootskörper (10) der Bootskörper eines Kanus ist.

11. Verfahren nach einem der vorhergehenden Ansprüche, **dadurch gekennzeichnet, dass** der Rahmen (12), der durch die Rahmenform am Rahmen (12) ausgebildete Formelemente (14, 16, 18, 20, 22) umfasst, und/oder ein mit dem Bootskörper (10) zu verbindendes vorgeformtes Element (24, 26) mit Hilfe eines Extrusions-Pressverfahrens oder eines Spritzgussverfahrens hergestellt wird.

12. Verfahren nach einem der vorhergehenden Ansprüche, **dadurch gekennzeichnet, dass** der Bootskörper (10) sowie der Rahmen (12) und/oder das vorgeformte Element (24, 26) aus demselben Kunststoff hergestellt werden, insbesondere einem thermoplastischen Kunststoff, wie z.B. Polyethylen.

13. Verfahren nach einem der vorhergehenden Ansprüche, **dadurch gekennzeichnet, dass** der Rahmen (12) und/oder das vorgeformte Element (12, 24, 26) in die Form eingelegt und/oder an der Innenseite der Form befestigt wird.

14. Verfahren nach einem der vorhergehenden Ansprüche, **dadurch gekennzeichnet, dass** zumindest ein Teil der Außenseite des Bootskörpers (10) eine erste Farbe und/oder das vorgeformte Element (12, 24, 26) eine von der ersten Farbe verschiedene zweite Farbe hat.

15. Verfahren nach einem der vorhergehenden Ansprüche, **dadurch gekennzeichnet, dass** der Bootskörper (10) mit Hilfe eines Blasformverfahrens an der Innenseite der Form erzeugt wird, wobei ein Vorformling in die Form eingebracht und durch einen Blasvorgang aufgeblasen wird, und wobei der Rahmen (12) durch den im Blasformverfahren aus dem Vorformling gebildeten blasgeformten Bootskörper (10) zumindest teilweise berührt wird.

16. Verfahren nach Anspruch 15, **dadurch gekennzeichnet, dass** der Bootskörper (10) mindestens zweischichtig aus zwei verschiedenfarbigen Werkstoffen derart ausgebildet ist, dass ein erster Werkstoff, der einen ersten Oberflächenbereich des Bootskörpers (10) bildet, eine von der Farbe eines zweiten Werkstoffs verschiedene Farbe hat, wobei der zweite Werkstoff einen zweiten Oberflächenbereich des Bootskörpers (10) bildet.

17. Vorrichtung zum Herstellen eines Bootskörpers eines Wassersportgerätes,
**gekennzeichnet durch**
Negativform, an deren Innenseite ein Rahmen (12) anbeordnet ist, wobei Innenseite der Negativform im Wesentlichen die Außenform des Bootskörpers (10) vorgibt,
und **durch** Anordnung, die mit Hilfe eines thermoplastischen Formverfahrens den Bootskörper (10) an der Innenseite der Form ausbildet, so dass der Bootskörper (10) den Rahmen (12) zumindest teilweise berührt, so dass der Bootskörper (10) und der Rahmen (12) derart verbunden sind, dass sich der mit dem Bootskörper verbundene Rahmen (12) um eine Einstiegsöffnung des Bootskörpers (10) erstreckt.

18. Wassersportgerät
mit einem langgestreckten thermoplastisch geformten Bootskörper (10), **dadurch gekennzeichnet, dass**
ein Rahmen (12) mit dem Bootskörper (10) durch eine während des thermoplastischen Formvorgangs zum Formen des Bootskörpers (10) erzeugte Verbindung verbunden ist.

19. Wassersportgerät nach Anspruch 18, **dadurch gekennzeichnet, dass** der Rahmen (12) zumindest teilweise vom Bootskörper (10) umschlossen und/oder stoffschlüssig mit dem Bootskörper (10) verbunden ist.

20. Wassersportgerät nach Anspruch 18 oder 19, **dadurch gekennzeichnet, dass** der Bootskörper (10) und/oder der Rahmen (12) aus einem thermoplastischern Kunststoff, insbesondere ein Hochdruckpolyethylen oder ein Niederdruckpolyethylen, hergestellt sind.

21. Wassersportgerät nach einem der Ansprüche 18 bis 20, **dadurch gekennzeichnet, dass** zumindest ein Teil der Außenseite des Bootskörpers (10) eine erste Farbe sowie der Rahmen (12) und/oder das vorgeformte Element (24, 26) eine von der ersten Farbe verschiedene zweite Farbe haben.

22. Wassersportgerät nach einem der Ansprüche 18 bis 21, **dadurch gekennzeichnet, dass** der Bootskörper (10) aus einem zweischichtigen Vorformling hergestellt ist, wobei der zweischichtige Vorformling derart in eine Form eingebracht und mit Hilfe eines thermoplastischen Formverfahrens geformt ist, dass zumindest die Außenschicht des oberen Teils des Bootskörpers (10) die erste Farbe und zumindest die Außenschicht des unteren Teils des Bootskörpers (10) die zweite Farbe hat.

## Claims

1. A method for producing a hull of a piece of water sports equipment,
in which a premoulded frame (12) is arranged on an inner surface of a negative mould, wherein the outer shape of the hull (10) is essentially predetermined by the inner surface of the negative mould,
the hull (10) is produced on the inner surface of the mould by a thermoplastic moulding process,
**characterized in that**
during the moulding operation, at least a part of the surface of the frame (12) is in contact with the hull (10) that is being moulded by the thermoplastic moulding process,
wherein a connection is produced between the frame (12) and the hull (10) so that the frame (12) is positioned around a cockpit opening of the hull (10).

2. The method according to claim 1, **characterized in that** the frame (12) is closed peripheral frame (12), which has an outwardly projecting coaming for attaching a spray cover, wherein the cross-section of the peripheral frame (12) is preferably a solid profile.

3. The method according to claim 1 or 2, **characterized in that** at least one moulded element is formed on the frame (12), and this moulded element is preferably provided as a thigh support element (14, 16) for a person in the hull (10), as a seat adjustment element (18, 20) for a seat mounted in the hull (10), and/or as a back support fixing element (22) for a back support element of the seat.

4. The method according to one of the preceding claims, **characterized in that** an additional premoulded element (24) is arranged in the mould, wherein the additional premoulded element is preferably a handle (24, 26).

5. The method according to claim 4, **characterized in that** the handle (26) has a base plate, which is joined with the hull (10) by the thermoplastic moulding process, wherein the base plate contains a hole (28), which is tightly plugged by a plug (29).

6. The method according to one of the preceding claims, **characterized in that** the thermoplastic moulding process is a blow moulding process, a rotational moulding process, a twin sheet moulding process, or a deep drawing moulding process.

7. The method according to one of the preceding claims, **characterized in that,** due to the contact during the thermoplastic moulding operation, at least one material-bonded connection is produced between the hull (10) and the frame (12).

8. The method according to one of the preceding claims, **characterized in that** the hull (10) at least partially surrounds the frame (12) and/or the premoulded element (24, 26) in such a way that a positive locking connection is produced between the hull (10) and the frame (12) and/or the premoulded element (24, 26).

9. The method according to one of the preceding claims, **characterized in that** the frame (12) and/or the premoulded element (12, 24, 26) is preheated, preferably in the mould, before the thermoplastic moulding operation.

10. The method according to one of the preceding claims, **characterized in that** the hull (10) is the hull of a kayak.

11. The method according to one of the preceding claims, **characterized in that** the frame (12) which includes moulded elements (14, 16, 18, 20, 22) formed on the frame (12) by the frame mould and/or a premoulded element (24, 26) to be joined with the hull (10) is produced by an extrusion moulding process or an injection moulding process.

12. The method according to one of the preceding claims, **characterized in that** the hull (10) and the frame (12) and/or the premoulded element (24, 26) are produced from the same plastic, especially a thermoplastic, such a polyethylene.

13. The method according to one of the preceding claims, **characterized in that** the frame (12) and/or the preformed element (12, 24, 26) is inserted in the mould and/or is mounted on the inner surface of the mould.

14. The method according to one of the preceding claims, **characterized in that** at least part of the outer surface of the hull (10) has a first colour and/or the premoulded element (12, 24, 26) has a second colour that is different from the first colour.

15. The method according to one of the preceding claims, **characterized in that** the hull (10) is produced on the inner surface of the mould by a blow moulding process, wherein a preform is placed in the mould and blown by a blowing operation, and wherein the frame (12) is at least partially in contact with the blow moulded hull (10) formed from the preform in the blow moulding process.

16. The method according to claim 15, **characterized in that** the hull (10) is formed with at least two layers from two differently coloured materials in such a way that a first material, which forms a first surface region of the hull (10), has a colour that is different from the colour of a second material which forms a second surface region of the hull (10).

17. A device for producing a hull of a piece of water sports equipment,
**characterized by** a negative mould, on the inner surface of which a frame (12) is arranged, wherein the inner surface of the negative mould essentially predetermines the outer shape of the hull (10), and by an arrangement which forms the hull (10) on the inner surface of the mould by means of a thermoplastic moulding process, so that the hull (10) is at least in partial contact with the frame (12), thereby causing the hull (10) and the frame (12) to be joined in such a way that the frame (12), which is joined with the hull, extends around a cockpit opening of the hull (10).

18. A piece of water sports equipment
with an elongated thermoplastically moulded hull (10),
**characterized in that**
a frame (12) is joined with the hull (10) by a connection procuded during the thermoplastic moulding operation for moulding the hull (10).

19. The piece of water sports equipment according to claim 18, **characterized in that** the frame (12) is at least partially surrounded by the hull (10) and/or has a material-bonded connection with the hull (10).

20. The piece of water sports equipment according to claim 18 or 19, **characterized in that** the hull (10) and/or the frame (12) is produced from a thermoplastic, especially a high-density polyethylene or a low-density polyethylene.

21. The piece of water sports equipment according to one of the claims 18 to 20, **characterized in that** at least part of the outer surface of the hull (10) has a first colour and the frame (12) and/or the premoulded element (24, 26) has a second colour that is different from the first colour.

22. The piece of water sports equipment according to one of the claims 18 to 21, **characterized in that** the hull (10) is produced from a two-layer preform, wherein the two-layer preform is placed in a mould and moulded by a thermoplastic moulding process in such a way that at least the outer layer of the upper part of the hull (10) has the first colour and at least the outer layer of the lower part of the hull (10) has the second colour.

## Revendications

1. Procédé de fabrication d'une coque pour une embarcation de sport nautique
dans lequel un cadre (12) préformé est agencé sur une face intérieure d'un moule négatif, la forme extérieure de la coque (10) étant sensiblement prédéfinie par la face intérieure du moule négatif,
la coque (10) est réalisée sur la face intérieure du moule au moyen d'un procédé de formage thermoplastique,
**caractérisé en ce que**, pendant le processus de moulage, au moins une partie de la surface du cadre (12) est mise en contact avec la coque (10) formée au moyen du procédé de formage thermoplastique,
une liaison étant générée entre le cadre (12) et la coque (10) de telle façon que le cadre (12) soit agencé autour d'une ouverture d'habitacle de la coque (10).

2. Procédé selon la revendication 1, **caractérisé en ce que** le cadre (12) est un cadre (12) fermé sur le pourtour, qui comporte une hiloire, en saillie vers l'extérieur, pour la fixation d'un couvre-habitacle, la section du cadre (12) périphérique étant de préférence un profilé plein.

3. Procédé selon la revendication 1 ou 2, **caractérisé en ce que** sur le cadre (12) est réalisé en au moins un élément profilé, qui est prévu de préférence pour un cale-cuisse (14, 16) d'une personne assise dans la coque (10), pour un réglage de siège (18, 20) d'un siège monté dans la coque (10) et/ou pour une fixation de dossier (22) d'un élément de dossier du siège.

4. Procédé selon l'une quelconque des revendications précédentes, **caractérisé en ce qu'**un autre élément préformé (24) est disposé dans le moule, l'autre élément préformé étant de préférence un élément d'accrochage (24, 26).

5. Procédé selon la revendication 4, **caractérisé en ce que** l'élément d'accrochage (26) comporte une plaque de base qui est reliée à la coque (10) par le procédé de formage thermoplastique, une ouverture (28) étant ménagée dans la plaque de base, laquelle est étanchée par un bouchon (29).

6. Procédé selon l'une quelconque des revendications précédentes, **caractérisé en ce que** le procédé de formage thermoplastique est un procédé de moulage par soufflage, un procédé de roto-moulage, un procédé twinsheet ou un procédé de formage par emboutissage profond.

7. Procédé selon l'une quelconque des revendications précédentes, **caractérisé en ce que**, sous l'effet du contact pendant le processus de formage thermoplastique, il se produit au moins un assemblage par conjugaison de matières entre la coque (10) et le cadre (12).

8. Procédé selon l'une quelconque des revendications précédentes, **caractérisé en ce que** la coque (10) entoure au moins en partie le cadre (12) et/ou l' élément (24, 26) préformé, de telle sorte qu'il se produit un assemblage par conjugaison de formes entre la coque (10) et le cadre (12) et, respectivement, l'élément préformé (24, 26).

9. Procédé selon l'une quelconque des revendications précédentes, **caractérisé en ce que** le cadre (12) et/ou l'élément préformé (12, 24, 26) sont préchauffés, de préférence dans le moule, avant le processus de formage thermoplastique.

10. Procédé selon l'une quelconque des revendications précédentes, **caractérisé en ce** la coque (10) est la coque de kayak.

11. Procédé selon l'une quelconque des revendications précédentes, **caractérisé en ce que** le cadre (12), qui comporte les éléments profilés (14, 16, 18, 20, 22) réalisés sur le cadre (12) par le moule du cadre, et/ou un élément préformé (24, 26) à assembler à la coque (10) sont réalisés au moyen d'un procédé de pressage par extrusion ou d'un procédé de moulage par injection.

12. Procédé selon l'une quelconque des revendications précédentes, **caractérisé en ce que** la coque (10), ainsi que le cadre (12) et/ou l'élément préformé (24, 26) sont réalisés dans la même matière plastique, en particulier une matière thermoplastique, tel que le polyéthylène.

13. Procédé selon l'une quelconque des revendications précédentes, **caractérisé en ce que** le cadre (12) et/ou l'élément préformé (12, 24, 26) sont mis en place dans le moule et/ou sont fixée à la face intérieure du moule.

14. Procédé selon l'une quelconque des revendications précédentes, **caractérisé en ce qu'**au moins une partie de la face extérieure de la coque (10) a une première couleur et/ou l'élément préformé (12, 24, 26) a une deuxième couleur, différente de la première couleur.

15. Procédé selon l'une quelconque des revendications précédentes, **caractérisé en ce que** la coque (10) est réalisée au moyen d'un procédé de moulage par soufflage sur la face intérieure du moule, une ébauche étant introduite dans le moule et étant déployée par un processus de soufflage, et le cadre (12) étant mis en contact au moins partiellement avec la coque (10) moulée par soufflage à partir de l'ébauche dans le procédé de moulage par soufflage.

16. Procédé selon la revendication 15, **caractérisé en ce que** la coque (10) est réalisée en au moins deux couches à partir de matériaux de couleurs différentes, de telle sorte qu'un premier matériau, qui forme une première zone de surface de la coque (10), a une couleur différente de la couleur d'un deuxième matériau, ledit deuxième matériau formant une deuxième zone de surface de la coque (10).

17. Dispositif de fabrication d'une coque pour une embarcation de sport nautique
**caractérisé par** un moule négatif, sur la face intérieure duquel est agencé un cadre (12), la face intérieure du moule négatif prédéfinissant sensiblement la forme extérieure de la coque (10),
et par un agencement qui réalise, au moyen d'un procédé de formage thermoplastique, la coque (10) sur la face intérieure du moule, de telle sorte que la coque (10) entre en contact au moins partiellement avec le cadre (12), de telle façon que la coque (10) et le cadre (12) soient reliés de telle sorte que le cadre (12), relié à la coque (10), s'étende autour d'une ouverture d'habitacle de la coque (10).

18. Embarcation de sport nautique, comportant une coque (10) allongée, réalisée par formage thermoplastique, **caractérisée en ce qu'**un cadre (12) est relié à la coque (10) par un assemblage généré pendant le processus de formage thermoplastique pour le formage de la coque (10).

19. Embarcation de sport nautique selon la revendication 18, **caractérisée en ce que** le cadre (12) est entouré au moins en partie par la coque (10) et/ou est assemblé par conjugaison de matières avec la coque (10) .

20. Embarcation de sport nautique selon la revendication 18 ou 19, **caractérisée en ce que** la coque (10) et /ou le cadre (12) sont réalisés dans une matière thermoplastique, en particulier un polyéthylène haute densité ou un polyéthylène basse densité.

21. Embarcation de sport nautique selon l'une quelconque des revendications 18 à 20, **caractérisée en ce qu'**au moins une partie de la face extérieure de la coque (10) a une première couleur, tout comme le cadre (12), et/ou l'élément préformé (24, 26) a une deuxième couleur, différente de la première couleur.

22. Embarcation de sport nautique selon l'une quelconque des revendications 18 à 21, **caractérisée en ce que** la coque (10) est réalisée à partir d'une ébauche à deux couches, ladite ébauche à deux couches étant introduite dans le moule et étant moulée au moyen d'un procédé de formage thermoplastique, de telle sorte qu'au moins la couche extérieure de la partie supérieure de la coque (10) a la première couleur et au moins la couche extérieure de la partie inférieure de la coque (10) a la deuxième couleur.
